# EUROPEAN PATENT APPLICATION

(11) **EP 4 847 556 A1**
(43) Date of publication of application: **02.12.2026**
(21) Application number: 25752498.3
(22) Date of filing: 10.02.2025
(51) Int. Cl.: C08J 9/00, C08J 9/28, C08J 5/18, C08L 23/00, B29C 55/12, B29C 48/08, H01M 50/417, H01M 10/052

(54) **POROUS POLYMER SUBSTRATE, METHOD OF MANUFACTURING THE SAME, AND LITHIUM SECONDARY BATTERY COMPRISING THE SAME**

(30) Priority: 08.02.2024 KR 20240019761; 21.10.2024 KR 20240144265
(71) Applicant: LG Chem, Ltd., Seoul 07336 (KR)
(72) Inventor: PARK, Chul, Daejeon 34122 (KR); KIM, Young-Eun, Daejeon 34122 (KR); KIM, Tae-Jun, Daejeon 34122 (KR); PARK, Jung-Gyun, Daejeon 34122 (KR); LEE, Joo-Sung, Daejeon 34122 (KR)
(74) Representative: Hoffmann Eitle
(86) International application number: PCT/KR2025/001945
(87) International publication number: WO 2025/170390

(57) **Abstract**

The present disclosure provides a porous polymer substrate in which a first polymer includes an olefin-derived first repeating unit, and a second polymer includes a hard segment including an olefin-derived second repeating unit and a soft segment including a third repeating unit derived from a hydrophilic group-containing or oxygen-containing monomer, wherein a weight average molecular weight of the first polymer is at least 3 times a weight average molecular weight of the second polymer.

## Description

### Technical Field

The present disclosure relates to a porous polymer substrate, a method for manufacturing the same, and a lithium secondary battery including the same.

### Cross citation with related applications

This application claims the priority to and the benefit of Korean Patent Application Nos. 10-2024-0019761 and 10-2024-0144265, filed in the Korean Intellectual Property Office on February 8, 2024 and October 21, 2024, respectively, the disclosure of which is incorporated herein by reference in its entirety.

### Background Art

Interest in energy storage technology has been increasing in recent years. As its applications have expanded to energy of mobile phones, camcorders, notebook PCs and even electric vehicles, effort in research and development for batteries are increasingly taking concrete form. In this regard, the field of electrochemical devices is receiving most attention. In particular, with the recent trend toward miniaturization and weight reduction in electronic devices, development of secondary batteries as compact, lightweight and high-capacity rechargeable batteries has become a focus of interest.

Among currently used secondary batteries, lithium secondary batteries developed in the early 1990s have attracted attention due to their advantages of high operating voltage and significantly higher energy density compared to conventional batteries such as Ni-MH, Ni-Cd and lead-acid batteries using an aqueous electrolyte liquid solution.

Meanwhile, the lithium secondary battery is used after performing an activation process. The activation process involves applying a current up to a predetermined voltage to an electrode assembly impregnated with an electrolyte liquid. Herein, the separator of the lithium secondary battery includes a material having hydrophobic properties such as polyolefin, whereas the electrolyte liquid is a material having hydrophilic properties, causing a problem in that the separator is not quickly impregnated with the electrolyte liquid during the activation process. When the separator is not quickly or sufficiently impregnated with the electrolyte liquid as described above, the electrode active material may not be sufficiently impregnated with the electrolyte liquid, and lithium ion migration may not be smooth.

### DISCLOSURE

### Technical Problem

The present disclosure has been made in an effort to solve the above-described problems, and the present disclosure is directed to providing a porous polymer substrate having, by including an oxygen-containing monomer-derived repeating unit in the porous polymer substrate, improved electrolyte liquid impregnation during an activation process, and excellent ion conductivity.

In addition, the present disclosure is directed to providing a method for manufacturing the porous polymer substrate using a wet process.

In addition, the present disclosure is directed to providing a method for manufacturing the porous polymer substrate using a dry process.

### Technical Solution

In order to achieve the above-described objects, one aspect of the present disclosure provides a porous polymer substrate of the following embodiments, a method for manufacturing a porous polymer substrate, and a lithium secondary battery including the same.

According to a first embodiment, there is provided a porous polymer substrate comprising: a first polymer includes an olefin-derived first repeating unit; and a second polymer includes a hard segment including an olefin-derived second repeating unit and a soft segment including a third repeating unit derived from a hydrophilic group-containing or oxygen-containing monomer, wherein a weight average molecular weight of the first polymer is at least 3 times a weight average molecular weight of the second polymer.

According to a second embodiment, in the first embodiment, a content of the second polymer may have a gradient such that the content increases from a center of the porous polymer substrate toward a surface thereof.

According to a third embodiment, in any one of the first and second embodiments, the content of the second polymer at the surface of the porous polymer substrate may be at least 1.5 times the content of the second polymer at the center of the porous polymer substrate.

According to a fourth embodiment, in any one of the first to third embodiments, the first polymer may have a weight average molecular weight of 150,000 to 2,000,000, and the second polymer may have a weight average molecular weight of 10,000 to 100,000.

According to a fifth embodiment, in any one of the first to fourth embodiments, the content of the second polymer may be 1% by weight to 15% by weight based on 100% by weight of the porous polymer substrate.

According to a sixth embodiment, in any one of the first to fifth embodiments, the hard segment and the soft segment may have a weight ratio of 1:0.1 to 5 in the second polymer.

According to a seventh embodiment, in any one of the first to sixth embodiments, the first repeating unit may be derived from ethylene, propylene, butylene, pentene, isoprene, or two or more monomers thereof.

According to an eighth embodiment, in any one of the first to seventh embodiments, the second repeating unit may be derived from ethylene, propylene, butylene, pentene, isoprene, or two or more monomers thereof.

According to a ninth embodiment, in any one of the first to eighth embodiments, the third repeating unit may be derived from an epoxy group-containing monomer, a hydroxyl group-containing monomer, a carboxyl group-containing monomer, or two or more monomers thereof.

According to a tenth embodiment, there is provided a method for manufacturing a porous polymer substrate, the method including: kneading and extruding a mixture including a first polymer, a second polymer and a plasticizer to obtain an extrudate; cooling the extrudate on a casting roll to obtain a sheet; biaxially stretching the obtained sheet in a machine direction (MD) and a transverse direction (TD) to obtain a stretched sheet; and extracting the plasticizer from the stretched sheet using an organic solvent, wherein the first polymer includes an olefin-derived first repeating unit, the second polymer includes a hard segment including an olefin-derived second repeating unit and a soft segment including a third repeating unit derived from a hydrophilic group-containing or oxygen-containing monomer, and a weight average molecular weight of the first polymer is at least 3 times a weight average molecular weight of the second polymer.

According to an eleventh embodiment, in the tenth embodiment, the mixture may include the second polymer in an amount of 1 part by weight to 15 parts by weight and the plasticizer in an amount of 200 parts by weight to 300 parts by weight based on 100 parts by weight of the first polymer.

According to a twelfth embodiment, in any one of the tenth and eleventh embodiments, the kneading of a mixture may be performed using a twin-screw extruder having a length (L)/diameter (D) of 52 or greater and 80 or less.

According to a thirteenth embodiment, in any one of the tenth to twelfth embodiments, the obtaining of an extrudate may be performed using a die extruder.

According to a fourteenth embodiment, there is provided a method for manufacturing a porous polymer substrate, the method including: preparing a mixture including a first polymer and a second polymer; melt-extruding the mixture to prepare an unstretched sheet; and stretching the unstretched sheet to obtain a stretched sheet, wherein the first polymer includes an olefin-derived first repeating unit, the second polymer includes a hard segment including an olefin-derived second repeating unit and a soft segment including a third repeating unit derived from a hydrophilic group-containing or oxygen-containing monomer, and a weight average molecular weight of the first polymer is at least 3 times a weight average molecular weight of the second polymer.

According to a fifteenth embodiment, in the fourteenth embodiment, the unstretched sheet may have crystallinity of 50% to 70%.

According to a sixteenth embodiment, in any one of the fourteenth and fifteenth embodiments, the obtaining of a stretched sheet may include performing stretching in an MD direction and a TD direction.

According to a seventeenth embodiment, there is provided a lithium secondary battery including: a positive electrode; a negative electrode; a separator interposed between the positive electrode and the negative electrode; and an electrolyte liquid, wherein the separator includes the porous polymer substrate according to any one of the first to ninth embodiments.

### Advantageous Effects

A porous polymer substrate according to one embodiment of the present disclosure exhibits excellent electrolyte liquid impregnation properties, thereby having excellent ion conductivity, and reducing activation process time.

A porous polymer substrate according to one embodiment of the present disclosure has a high second polymer content in the surface compared to the central portion, so that the porous polymer substrate can have more excellent hydrophilicity while having excellent mechanical properties.

The effects of the present disclosure are not limited to the above-described effects, and it should be understood that the effects include all effects that can be inferred from configurations of the invention described in the detailed description of the present disclosure or the claims.

### Brief Description of Drawings

Drawings accompanying the present specification illustrate preferred examples of the present disclosure, and serve to aid in further understanding of the technical idea of the present disclosure together with the description of the invention provided above, and therefore, the present disclosure should not be construed as being limited to matters described in these drawings.
FIG. 1 shows photographs comparing impregnation properties of porous polymer substrates of Example 1 and Comparative Example 1.
FIG. 2 shows photographs comparing impregnation properties of porous polymer substrates of Example 2-1 and Comparative Example 2-1.
FIG. 3A is a photograph obtained by measuring a surface of the porous polymer substrate of Example 2-1 using an SEM.
FIG. 3B is a photograph obtained by measuring a surface of the porous polymer substrate of Comparative Example 2-1 using an SEM.

### Mode for Invention

Terms or words used in the present specification and the claims should not be interpreted limitedly to common or dictionary meanings, and need to be interpreted as meanings and concepts corresponding to the technical idea of the present disclosure based on a principle in which the inventors may suitably define the concept of terms in order to describe their own invention in the best possible way.

Terms used in the present specification are used to describe exemplary embodiments only, and are not intended to limit the present disclosure. Singular forms include plural forms, unless the context clearly indicates otherwise.

### <Definition>

In the present specification, a description of a certain part "including" a certain component means that it may further include other components, and does not exclude other components unless particularly stated on the contrary.

Specific terms used in the present specification are for convenience only and are not intended to be limiting. Terms such as "upper", "lower", "left", "right", "front", "back", "inner" and "outer" may be used to describe relative positions or directions of components with respect to each other, rather than absolute positions. The terms include, in addition to these terms themselves, words including these, derivatives thereof and words having similar meanings.

In the present specification, a "thickness" of each layer included in an electrode used may represent a value measured using a known method for measuring a thickness. The method for measuring a thickness may be, although not limited thereto, a method using, for example, a thickness gauge (Mitutoyo Corporation, VL-50S-B).

### <Porous Polymer Substrate>

The present disclosure provides a porous polymer substrate.

A first polymer of the porous polymer substrate of the present disclosure includes an olefin-derived first repeating unit, a second polymer thereof includes a hard segment including an olefin-derived second repeating unit and a soft segment including a third repeating unit derived from a hydrophilic group-containing or oxygen-containing monomer, and a weight average molecular weight of the first polymer is at least 3 times a weight average molecular weight of the second polymer.

In one embodiment of the present disclosure, the first repeating unit may be derived from ethylene, propylene, butylene, pentene, isoprene, or two or more monomers thereof. Preferably, the first repeating unit may be derived from a propylene monomer.

In one embodiment of the present disclosure, when the first repeating unit is derived from a propylene monomer, the first polymer may be polypropylene.

In one embodiment of the present disclosure, when the first polymer is polypropylene, it may have excellent heat resistance and chemical resistance compared to polyethylene. Meanwhile, when the first polymer is polypropylene, electrolyte liquid impregnation may be somewhat unfavorable, however, by the porous polymer substrate including the second polymer as described below, the porous polymer substrate may have excellent electrolyte liquid impregnation properties.

In one embodiment of the present disclosure, the polypropylene may include isotactic polypropylene, atactic polypropylene, or a combination thereof.

In one embodiment of the present disclosure, the 'atactic polypropylene' refers to polypropylene in which stereochemistry for adjacent chiral centers is randomly present, and in the present specification, a ratio of such randomly arranged atactic stereochemistry is expressed as an 'atactic index'.

In one embodiment of the present disclosure, the 'isotactic polypropylene' is understood to mean polypropylene substantially consisting of 100% meso diads. Meanwhile, in the present specification, the term isotactic index is understood to mean a meso diad ratio of polypropylene.

In one embodiment of the present disclosure, the polypropylene may be ultra-low-density polypropylene, low-density polypropylene, linear low-density polypropylene, metallocene polypropylene, a polypropylene-based elastomer, or two or more thereof.

In one embodiment of the present disclosure, the second polymer may be a copolymer including a second repeating unit and a third repeating unit, and the second polymer may be a random copolymer, an alternating copolymer or a block copolymer including a second repeating unit and a third repeating unit. Preferably, the second polymer may be a block copolymer including a block composed of second repeating units and a block composed of third repeating units.

In the present specification, the block composed of second repeating units is referred to as a hard segment, and the block composed of third repeating units is referred to as a soft segment. The hard segment includes an olefin-derived second repeating unit, and since the olefin-derived second repeating unit has excellent linearity and crystallinity, the block including the second repeating unit exhibits hardness. The soft segment includes a third repeating unit derived from a hydrophilic group-containing or oxygen-containing monomer, and the third repeating unit derived from a hydrophilic group-containing or oxygen-containing monomer has relatively decreased linearity and crystallinity due to the hydrophilic group or oxygen atom, and therefore, the block including the third repeating unit exhibits softness.

In one embodiment of the present disclosure, the second repeating unit may be derived from ethylene, propylene, butylene, pentene, isoprene, or two or more monomers thereof. Preferably, the second repeating unit may be derived from a propylene monomer.

In one embodiment of the present disclosure, the oxygen-containing monomer may include an oxygen atom as a part of the main chain or in a side chain, and may preferably include an oxygen atom in the main chain. When a hydrophilic group is included in the main chain, the main chain may be an olefin compound.

In one embodiment of the present disclosure, the third repeating unit may be derived from an epoxy group-containing monomer, a hydroxyl group-containing monomer, a carboxyl group-containing monomer, or two or more monomers thereof.

In one embodiment of the present disclosure, the epoxy group-containing monomer may be ethylene oxide, propylene oxide, 1,2-butylene oxide, 2,3-butylene oxide, or a combination thereof.

In one embodiment of the present disclosure, the hydroxyl group-containing monomer may be, for example, an alkene containing an alcohol group having 1 to 6 carbon atoms. For example, the hydroxyl group-containing monomer may be vinyl alcohol, allyl alcohol, 3-buten-1-ol, 3-buten-2-ol, 4-penten-1-ol, 4-penten-2-ol, 1-penten-3-ol, 5-hexen-1-ol, 5-hexen-2-ol, 5-hexen-1-ol, 1-hexen-3-ol, ethylene glycol, propylene glycol, glycerol, or a combination thereof.

In one embodiment of the present disclosure, the carboxyl group-containing monomer may be, for example, a (meth)acrylate, and an amine group-containing monomer may be, for example, vinyl pyrrolidone.

In one embodiment of the present disclosure, the second repeating unit may be the same type as the first repeating unit, and in this case, the second polymer may have excellent compatibility with the first polymer.

In one embodiment of the present disclosure, the second polymer may be a polyolefin-*b*-polyethylene oxide-based compound, and may include, for example, polyethylene-*b*-polyethylene oxide, polypropylene-*b*-polyethylene oxide, polybutylene-*b*-polyethylene oxide, polypentene-*b*-polyethylene oxide, polyisoprene-*b*-polyethylene oxide, polyethylene-*b*-polypropylene-*b-*polyethylene oxide, ethylene-propylene alternating copolymer-*b-*polyethylene oxide, or the like.

In one embodiment of the present disclosure, the content of the second polymer may have a gradient such that the content increases from the center of the porous polymer substrate toward the surface.

In one embodiment of the present disclosure, the weight average molecular weight of the first polymer may be at least 4 times or at least 5 times the weight average molecular weight of the second polymer. Meanwhile, in one embodiment of the present disclosure, the weight average molecular weight of the first polymer may be at most 50 times, at most 40 times, or at most 35 times the weight average molecular weight of the second polymer.

The porous polymer substrate of the present disclosure is manufactured that uses a wet process using a plasticizer or a dry process that does not use a plasticizer as described below, and a mixture of the first polymer and the second polymer is extruded to form an unstretched sheet. During the process, the second polymer migrates to the surface of the unstretched sheet. When the weight average molecular weight of the first polymer satisfies the above-described range, the proportion of the second polymer is high at the surface while compatibility between the second polymer and the first polymer is excellent, thereby maximizing hydrophilicity of the surface of the manufactured porous polymer substrate. Accordingly, the porous polymer substrate may have excellent electrolyte liquid impregnation properties.

In one embodiment of the present disclosure, the content of the second polymer at the surface of the porous polymer substrate may be at least 1.5 times, at least 1.6 times, at least 1.7 times, or at least 1.8 times the content of the second polymer at the center of the porous polymer substrate. As the content of the second polymer satisfies the above-described range at the surface of the porous polymer substrate, the pore structure inside the porous polymer substrate may be uniformly developed, and as a result, mechanical strength may be more excellent.

In one embodiment of the present disclosure, the surface of the porous polymer substrate may refer to, based on a thickness direction of the porous polymer substrate, a portion from one side surface to 10% of the upper thickness. Alternatively, the surface of the porous polymer substrate may refer to, based on a thickness direction of the porous polymer substrate, a portion extending from one side surface to 9%, 8%, 7%, 6%, 5%, 4%, 3%, 2% or 1% of the upper thickness.

In one embodiment of the present disclosure, the porous polymer substrate may be in the form of a sheet having a rectangular shape, and a longer direction of the separator may be referred to as a longitudinal direction, a long-side direction or a machine direction (MD), and a shorter direction of the separator may be referred to as a transverse direction (TD). Herein, the 'thickness direction' may refer to a direction perpendicular to the longitudinal direction and the transverse direction.

In one embodiment of the present disclosure, the first polymer may have a weight average molecular weight of 150,000 to 2,000,000, and the second polymer may have a weight average molecular weight of 10,000 to 100,000.

In one embodiment of the present disclosure, the first polymer may have a weight average molecular weight of 150,000 to 2,000,000, 170,000 to 1,500,000, or 200,000 to 1,200,000. When the weight average molecular weight of the first polymer satisfies the above-described range, the porous polymer substrate may have excellent mechanical strength.

In one embodiment of the present disclosure, the second polymer may have a weight average molecular weight of 10,000 to 100,000, 20,000 to 80,000, or 25,000 to 60,000. When the weight average molecular weight of the second polymer satisfies the above-described range, the porous polymer substrate may have excellent hydrophilicity while having excellent mechanical strength.

Herein, the weight average molecular weight may be measured through a gel permeation chromatography (GPC) analysis. For example, PL GPC220 by Agilent Technologies may be used as the gel permeation chromatography analysis device, and the measurement conditions may be as follows.
- Column (maker, model no.): 2xTSKgel SupermultiporeHZ-M+TSKgel SuperHZ-2500
- Eluent: THF
- Temperature: 40°C
- Flow rate: 1.0 mL/min
- Injection volume and sample concentration: 30 µl, 1 mg/mL to 10 mg/mL
- Standard: Polystyrene
- Detector: RI

In one embodiment of the present disclosure, the content of the second polymer may be 1% by weight to 15% by weight based on 100% by weight of the porous polymer substrate. The content of the second polymer may be, for example, 3% by weight to 10% by weight or 4% by weight to 7% by weight based on 100% by weight of the porous polymer substrate. By the content of the second polymer satisfying the above-described range, the pore structure of the porous polymer substrate may be uniformly developed, and mechanical strength thereof may be more excellent.

In one embodiment of the present disclosure, the hard segment and the soft segment may have a weight ratio of 1:0.1 to 5 in the second polymer. In other words, the second repeating unit and the third repeating unit may have a weight ratio of 1:0.1 to 5. When the hard segment and the soft segment of the second polymer satisfy the above-described range, the second polymer and the first polymer may have excellent compatibility while providing hydrophilicity to the porous polymer substrate.

In one embodiment of the present disclosure, the second repeating unit and the third repeating unit may have a molar ratio of 3:7 to 7:3, 4:6 to 6:4, or 5:5 in the second polymer. When the molar ratio of the second repeating unit to the third repeating unit satisfies the above-described range, the porous polymer substrate may have excellent mechanical strength while having excellent hydrophilicity.

Meanwhile, a method for manufacturing a porous polymer substrate used for a separator includes a dry process in which an extruded substrate is stretched at a low temperature to generate microcracks at a lamellar crystal interface to achieve porosity, and a wet process in which a polymer and a plasticizer are uniformly mixed at a high temperature, followed by cooling to induce phase separation, and then the plasticizer is removed to obtain a porous membrane. Hereinafter, a method for manufacturing a porous polymer substrate using the dry process and the wet process, and unique properties of a porous polymer substrate manufactured using the method will be described.

### <Method for Manufacturing Porous Polymer Substrate Using Wet Process and Porous Polymer Substrate Manufactured Thereby>

According to one aspect of the present disclosure, there is provided a method for manufacturing a porous polymer substrate, the method including: kneading and extruding a mixture including a first polymer, a second polymer and a plasticizer to obtain an extrudate; cooling the extrudate on a casting roll to obtain a sheet; and biaxially stretching the obtained sheet in a machine direction (MD) and a transverse direction (TD) to obtain a stretched sheet; and extracting the plasticizer from the stretched sheet using an organic solvent, wherein the first polymer includes an olefin-derived first repeating unit, the second polymer includes a hard segment including an olefin-derived second repeating unit and a soft segment including a third repeating unit derived from a hydrophilic group-containing or oxygen-containing monomer, and a weight average molecular weight of the first polymer is at least 3 times a weight average molecular weight of the second polymer.

Herein, descriptions of the first polymer and the second polymer are the same as those described above.

First, a mixture including a first polymer, a second polymer and a plasticizer is kneaded and extruded to obtain an extrudate. Herein, an additive commonly used in the art may be added to the mixture, and as the additive, a nucleating agent, an antioxidant, a UV stabilizer or the like may be included.

In one embodiment of the present disclosure, the plasticizer is not particularly limited as long as it is commonly used in the art. The plasticizer may include, for example, liquid paraffin, paraffin oil; phthalic acid esters such as dibutyl phthalate, dihexyl phthalate or dioctyl phthalate; aromatic ethers such as diphenyl ether or benzyl ether; fatty acids having 10 to 20 carbon atoms such as palmitic acid, stearic acid, oleic acid, linoleic acid or linolenic acid; fatty acid alcohols having 10 to 20 carbon atoms such as palmitic alcohol, stearic alcohol or oleic alcohol; or fatty acid esters in which a saturated or unsaturated fatty acid having 4 to 26 carbon atoms of a fatty acid group or one, or two or more fatty acids having a double bond of an unsaturated fatty acid substituted with an epoxy group are ester-bonded with an alcohol having 1 to 8 hydroxyl groups and 1 to 10 carbo atoms, such as palmitic acid mono-, di- or tri-ester, stearic acid mono-, di- or tri-ester, oleic acid mono-, di- or tri-ester, or linoleic acid mono-, di- or tri-ester.

In one embodiment of the present disclosure, in the obtaining of an extrudate, the mixture may further include a compatibilizer.

In one embodiment of the present disclosure, the compatibilizer may include, for example, polyethylene grafted maleic anhydride (PE-g-MAH), poly(ethylene-co-vinyl acetate), poly(ethylene-co-glycidyl methacrylate), poly(ethylene-co-methacrylic acid), or two or more thereof.

In one embodiment of the present disclosure, the mixture may include the second polymer in an amount of 1 part by weight to 15 parts by weight or 3 parts by weight to 10 parts by weight and the plasticizer in an amount of 200 parts by weight to 300 parts by weight or 230 parts by weight to 270 parts by weight based on 100 parts by weight of the first polymer. When the content of the second polymer satisfies the above-described range, the porous polymer substrate may have excellent hydrophilicity. In addition, when the content of the plasticizer satisfies the above-described range, hardness of the porous polymer substrate may be appropriate.

In one embodiment of the present disclosure, the mixture including the first polymer, the second polymer, the plasticizer and optionally the compatibilizer may be kneaded using a twin-screw extruder, a kneader, a Banbury mixer or the like. Preferably, in the kneading of a mixture, a twin-screw extruder having length (L)/diameter (D) of 52 or greater and 80 or less may be used. When the length (L)/diameter (D) is less than the lower limit of the above-mentioned numerical range, kneadability may be insufficient, and when the length (L)/diameter (D) is greater than the upper limit of the above-mentioned numerical range, mechanical stability may be insufficient.

In one embodiment of the present disclosure, a die extruder may be used in the obtaining of an extrudate. The die extruder may be a T-die extruder or an annular die extruder. When a die extruder is used as in the present disclosure, the oxygen-containing repeating unit is placed at the surface of the extrudate of the porous polymer substrate manufactured, and the porous polymer substrate may have excellent hydrophilicity.

In one embodiment of the present disclosure, the extrusion temperature during the extrusion needs to be above the temperature at which the first polymer and the second polymer are formed into a single phase, and below the temperature at which thermal oxidation occurs, thereby degrading properties of the polymer. A preferred extrusion temperature is 170°C or higher and 230°C or lower. When processed in the above-mentioned temperature range, the mixture may be sufficiently mixed, and the polymer may not be decomposed. The mixture including the first polymer, the second polymer, the plasticizer and optionally the compatibilizer is blended and introduced to a compound, or may be individually introduced from a separate feeder and then kneaded with an appropriate screw configuration in an extruder.

Then, the extrudate is cooled on a casting roll to obtain a sheet.

In a specific embodiment of the present disclosure, general casting, blowing, calendering or water-cooling methods may all be used as the method for obtaining a molded article having a sheet form or a sheet from the extrudate. Herein, the cooling rate of the extrudate is important. The extrudate thermodynamically in a single phase during the melt extrusion process undergoes phase separation during the cooling process. Herein, the first polymer and the second polymer are phase-separated.

Then, the obtained sheet is biaxially stretched in the machine direction (MD) and the transverse direction (TD). The sheet may be stretched sequentially or simultaneously using a roll-type or tenter-type method. The stretching ratio is at least 3 times in each of the machine direction (MD) and the transverse direction (TD), and the total stretching ratio is preferably 25 times to 170 times. When the stretching ratio in one direction is less than 3 times, orientation in one direction is not sufficient, and the balance of physical properties between the longitudinal and transverse directions are disrupted as well, reducing tensile strength, puncture strength and the like. In addition, when the total stretching ratio is less than 25 times, non-stretching occurs, and the total stretching ratio being greater than 170 times has disadvantages in that the likelihood of breakage during stretching is high, and the shrinkage rate of a final film increases.

Subsequently, the plasticizer is extracted from the stretched sheet using an organic solvent. As the stretched sheet passes through the organic solvent, the plasticizer is extracted, and a porous polymer substrate having pores formed therein is manufactured.

The organic solvent is preferably an antisolvent for the first polymer and the second polymer and a good solvent for the plasticizer, and has a boiling point lower than the melting points of the first polymer and the second polymer, thereby allowing rapid drying. Examples of the organic solvent may include hydrocarbons such as n-hexane or cyclohexane, halogenated hydrocarbons such as methylene chloride, 1,1,1-trichloroethane, fluorocarbons or dichloromethane, alcohols such as ethanol or isopropanol, or ketones such as acetone or 2-butanone.

In one embodiment of the present disclosure, the method for manufacturing a porous polymer substrate may further include drying the sheet using a method such as hot air, an infrared heater or vacuum heating after the biaxial stretching.

In one embodiment of the present disclosure, the method may further include, in order to reduce the shrinkage rate of a final film by relieving residual stress, finally heat-setting the thinned porous polymer substrate after the drying.

In one embodiment of the present disclosure, the heat-setting involves fixing the porous polymer substrate, and applying heat thereto to forcibly restrain the porous polymer substrate that is about to shrink, thereby relieving residual stress. A high heat-setting temperature is advantageous for reducing the shrinkage rate, however, when the heat-setting temperature is too high, the porous polymer substrate partially melts, clogging the formed micropores, and as a result, permeability is reduced. The heat-setting temperature is preferably selected in a temperature range in which 10% by weight to 30% by weight of the crystalline portion of the porous polymer substrate melts. When the heat-setting temperature is selected in a temperature range lower than the temperature at which 10% by weight of the crystalline portion of the porous polymer substrate melts, reorientation of the polyolefin molecules within the porous polymer substrate is insufficient, resulting in no effect on relieving residual stress of the porous polymer substrate, and when the heat-setting temperature is selected in a temperature range higher than the temperature at which 30% by weight of the crystalline portion of the porous polymer substrate melts, micropores are blocked by partial melting, thereby reducing permeability. Herein, the heat-setting time needs to be relatively short when the heat-setting temperature is high, and the heat-setting time may be relatively long when the heat-setting temperature is low. When a tenter-type continuous heat-setting device is used, the heat-setting time is preferably 20 seconds to 2 minutes. Most preferably, it is suitable that the heat-setting time is 1 minute to 2 minutes in a temperature range in which 10% by weight to 15% by weight of the crystalline portion of the porous polymer substrate melts, and about 20 seconds to 1 minute in a temperature range in which 15% by weight to 30% by weight thereof melts.

In one embodiment of the present disclosure, there may be provided a porous polymer substrate manufactured using the wet process described above.

In one embodiment of the present disclosure, the porous polymer substrate for a separator may further include a compatibilizer to prevent aggregation between the second polymers including an oxygen-containing monomer-derived third repeating unit and to improve compatibility between the first polymer and the second polymer. In particular, since the first polymer is generally hydrophobic and the second polymer is generally hydrophilic, a compatibilizer having both polar and nonpolar properties to readily knead the two at the same time is preferred.

In one embodiment of the present disclosure, the compatibilizer may include, for example, polyethylene grafted maleic anhydride (PE-g-MAH), poly(ethylene-co-vinyl acetate), poly(ethylene-co-glycidyl methacrylate), poly(ethylene-co-methacrylic acid), or two or more thereof.

In one embodiment of the present disclosure, the compatibilizer may be included in an amount of 0.5% by weight to 5% by weight or 1% by weight to 3% by weight based on 100% by weight of the porous polymer substrate. When the content of the compatibilizer satisfies the above-described range, it may contribute to the formation of a co-continuous structure without delaminating the interface between the first polymer and the second polymer.

In one embodiment of the present disclosure, the porous polymer substrate may have a surface tension of 30 dyne/cm to 75 dyne/cm or 32 dyne/cm to 70 dyne/cm.

In one embodiment of the present disclosure, the porous polymer substrate may have a shape of a film or non-woven fabric.

In one embodiment of the present disclosure, the porous polymer substrate may exhibit a shut-down function at a temperature of, for example, 80°C to 150°C. The shut-down temperature may be determined using a Gurley-type air permeability device by measuring the time (sec) taken for 100 ml of air to pass through the separator under a constant pressure of 0.05 MPa when the temperature is increased at a rate of 5°C per minute, and measuring the temperature at which the air permeability of the separator increases sharply. By satisfying the shut-down temperature, overcharge stability may be ensured, and high-temperature stability of the separator may be significantly increased.

In one embodiment of the present disclosure, the thickness of the porous polymer substrate is not particularly limited, but is specifically 1 µm to 100 µm and more specifically 5 µm to 50 µm. With the recent trend toward high output and high capacity in batteries, it is advantageous to use a thin film as the porous polymer substrate.

In one embodiment of the present disclosure, the pores present in the porous polymer substrate may have diameters of 10 nm to 100 nm, 10 nm to 70 nm, 10 nm to 50 nm, or 10 nm to 35 nm.

In one embodiment of the present disclosure, the porosity may be formed to be 5% to 90%, and preferably 20% to 80%.

However, in the present disclosure, such numeral ranges may be readily modified according to specific embodiments or as needed.

In the present specification, the term "porosity" refers to a ratio of the volume occupied by pores relative to the total volume in any structure, is expressed in a unit of % by volume (vol%), and may be used interchangeably with terms such as void fraction and porosity degree. In the present disclosure, the porosity may be measured without particular limit, and, according to one embodiment of the present disclosure, may be measured using, for example, a BET (Brunauer-Emmett-Teller) measurement method using nitrogen gas or a mercury (Hg) porosimeter, and in accordance with ASTM D-2873. Alternatively, the porosity of the porous polymer substrate may be determined by calculating an apparent density of the porous polymer substrate, a true density the porous polymer substrate from a composition ratio of materials included in the porous polymer substrate and density of each component, and then calculating a difference between the apparent density and the true density.

In one embodiment of the present disclosure, the pore diameter of the porous polymer substrate may be measured using a capillary flow porometer (CFP).

### <Method for Manufacturing Porous Polymer Substrate Using Dry Process and Porous Polymer Substrate Manufactured Thereby>

According to another aspect of the present disclosure, there is provided a method for manufacturing a porous polymer substrate, the method including: preparing a mixture including a first polymer and a second polymer; melt-extruding the mixture to prepare an unstretched sheet; and stretching the unstretched sheet to obtain a stretched sheet, wherein the first polymer includes an olefin-derived first repeating unit, the second polymer includes a hard segment including an olefin-derived second repeating unit and a soft segment including a third repeating unit derived from a hydrophilic group-containing or oxygen-containing monomer, and a weight average molecular weight of the first polymer is at least 3 times a weight average molecular weight of the second polymer.

Herein, descriptions of the first polymer and the second polymer are the same as those described above.

In one embodiment of the present disclosure, the porous polymer substrate may be a porous polymer film prepared using a dry process. The drying process refers to a method of melting the first polymer and the second polymer using an extruder, extruding the molten resin into a sheet form, and forming pores through stretching. Unlike a wet process using a plasticizer, the drying process uses crystallinity of a polymer resin such as polyolefin to form pores. Accordingly, the processes of kneading and extracting a plasticizer and a diluent used in a wet process are eliminated, which is environmentally friendly and advantageous in terms of cost reduction.

First, a mixture including a first polymer and a second polymer is prepared.

After that, the mixture is melt-extruded to prepare an unstretched sheet.

In one embodiment of the present disclosure, one, or multiple extruders may be used in the melt extrusion process. Meanwhile, a flat die such as a T die or a coat-hanger die may be used as the extruder, however, the extruder is not limited thereto.

In one embodiment of the present disclosure, the melt extrusion may be performed using a single-screw or twin-screw extruder to extrude the mixture including a first polymer and a second polymer into a sheet or film form. Herein, the extrusion temperature may be about 170°C to about 280°C.

In one embodiment of the present disclosure, a casting process may be performed after the extrusion process. The casting process may be performed at a temperature of about 120°C or lower. For example, the casting process may be performed at a temperature of about 100°C or lower. In addition, the casting process may include a method of contacting the sheet with a cooling medium, or contacting the sheet with a refrigerant-cooled roll or press.

In one embodiment of the present disclosure, the extruded unstretched sheet may be annealed to stabilize the crystal structure. The annealing process may be performed at a temperature of about 100°C to about 165°C. During the annealing process, the annealing may be performed in an oven at about 100°C to about 165°C or about 125°C to about 160°C for a residence time of about 1 minute to about 60 minutes or about 3 minutes to about 30.

In the present specification, the term 'unstretched sheet' collectively refers to an intermediate product or the like in a state in which no additional force that causes significant dimensional deformation of the film is applied other than the tension applied for film conveyance, and the film in this state exists as a non-porous film having no pores. This term is used to distinguish the film from the porous polymer substrate finally obtained after the stretching process.

In one embodiment of the present disclosure, the unstretched sheet may have crystallinity of 50% to 70%. When the unstretched sheet has crystallinity of 50% or less, pores are not readily formed, increasing resistance of the porous polymer substrate, and lifespan properties of a lithium secondary battery may deteriorate. On the other hand, when the unstretched sheet has crystallinity of 70% or greater, excessive crystallization may cause tearing of the film during stretching in the TD direction, making it difficult to ensure processability.

After that, the unstretched sheet is stretched to obtain a stretched sheet.

In one embodiment of the present disclosure, the stretching process may be performed in a temperature range of 100°C to 150°C, for example, in a temperature range of 120°C to 140°C.

Optionally, the stretched film may be heat-set at a temperature of 120°C to 160°C for about 5 seconds to about 300 seconds. After the heat-setting, the film may be relaxed at a relaxation rate of 10% to 40%, preferably 10% to 25% at a temperature of 120°C to 160°C, preferably 130°C to 150°C.

In one embodiment of the present disclosure, the porous polymer substrate may be biaxially stretched in the MD and TD directions. Specifically, the biaxial stretching may be performed by stretching the substrate 3 to 6 times in each of the longitudinal and transverse directions.

In one embodiment of the present disclosure, the stretching processes in the MD and TD directions may be performed continuously. From a productivity perspective, it is more effective to first stretch the sheet in the MD direction to reduce the width of the sheet and then subsequently perform stretching in the TD direction, compared to performing the processes in the reverse order. First, as the unstretched sheet is stretched in the MD direction, pores may be formed as cracks occur between crystalline regions and amorphous regions of the extruded sheet. After such a stretching process in the MD direction, the stretching process in the TD direction may be subsequently performed. In particular, the stretching process in the TD direction is preferably performed two or more in multiple stages under different stretching ratio and temperature conditions. Since stiffness in the TD direction is very weak after the stretching in the MD direction, a problem of tearing or partial over-stretching may occur during the stretching in the TD direction, and therefore, a multi-stage stretching process may be performed in accordance with the properties of the sheet.

In one embodiment of the present disclosure, the stretching process is not particularly limited. The stretching process may include, for example, a method of imparting a peripheral speed difference to multiple rollers and stretching the sheet therebetween using the peripheral speed difference between the rollers, a method of fixing both ends of the unstretched sheet with clips or pins and stretching the sheet by increasing the space between the clips or pins in a travel direction, and the like, and these methods may be used in combination.

In one embodiment of the present disclosure, the method for manufacturing a porous polymer substrate may further include drying the sheet using a method such as hot air, an infrared heater or vacuum heating after the stretching.

In another embodiment of the present disclosure, a porous polymer substrate manufactured using the wet process as described above may be provided.

In one embodiment of the present disclosure, the porous polymer substrate may have porosity of 20 vol% to 60 vol%, or 45 vol% to 55 vol%.

In one embodiment of the present disclosure, the porous polymer substrate may have a pore diameter of 10 nm to 70 nm.

In one embodiment of the present disclosure, the porous polymer substrate may have crystallinity of 60% to 85%. When the porous polymer substrate has crystallinity of 60% or less, pores are not readily formed, increasing resistance of the separator, and lifespan properties of a lithium secondary battery may deteriorate. On the other hand, when the porous polymer substrate has crystallinity of 85% or greater, excessive crystallization may cause tearing of the film during stretching in the TD direction, making it difficult to ensure processability.

In one embodiment of the present disclosure, the crystallinity refers to the percentage of crystals included in the polymer. The crystallinity may be measured using a wide-angle X-ray scattering method (WAXS method), a density method, and a thermal analysis method.

For example, the thermal analysis method may be performed using a differential scanning calorimeter (DSC). Herein, the crystallinity x_{c} is calculated by the following equation.${x}_{c} \left(%\right) = \left(ΔHm\div Δ{Hm}^{0}\right) \times 100$

In the equation, ΔHm represents a heat of fusion of the sample measured using the DSC, and Hm⁰ represents an equilibrium heat of fusion. As Hm⁰, a value taken from known literature may be used. For example, according to the Polymer Handbook, Hm⁰ is 8.7 (kJ/mol) for iPP.

In one embodiment of the present disclosure, the porous polymer substrate may be biaxially stretched in the MD and TD directions.

In one embodiment of the present disclosure, the porous polymer substrate is manufactured using a dry process, and a plasticizer may not be included. The porous polymer substrate is manufactured using a dry process, and a plasticizer may not be substantially included. For example, the porous polymer substrate may include a plasticizer in an amount of less than 3% by weight, less than 2% by weight, less than 1% by weight, less than 0.5% by weight, or less than 0.1% by weight based on 100% by weight of the porous polymer substrate.

In one embodiment of the present disclosure, the porous polymer substrate may be characterized by being biaxially stretched in the MD and TD directions.

In one embodiment of the present disclosure, the porous polymer substrate includes linear lamellae having a predetermined width, the lamellae are spaced apart from each other by a predetermined distance, and two adjacent lamellae are connected by a plurality of fine fibrils, such that the pores may have a rectangular planar shape by the lamellae and the fine fibrils.

The porous polymer substrate according to one embodiment of the present disclosure may exhibit a pore type resulting from a unique slit structure different from that of existing porous polymer films. The porous polymer substrate may have a form in which it includes linear lamellae having a predetermined width, the lamellae are spaced apart from each other by a predetermined distance, and two adjacent lamellae are connected by a plurality of fine fibrils. Due to such structural characteristics, the pores included in the porous polymer substrate may have a rectangular or rectangular-like planar shape. Such a unique pore shape may preferably be realized by the method for manufacturing a porous polymer substrate of the present disclosure, and as the unstretched sheet is stretched in the MD direction, interlamellar portions between the lamellae are split, the lamellae are spaced apart from each other by a predetermined distance, and adjacent lamellae may be connected by a number of fine fibrils derived from the interlamellar portions.

In addition, as orientation of the lamellae formed in a certain direction by the MD-direction stretching is partially relaxed through the TD-direction stretching performed after the MD-direction stretching, asymmetry of tensile strength in the MD and TD directions is reduced, and at the same time, additional voids are formed between a number of the fine fibrils derived from the lamellar portions, thereby reducing resistance of the separator.

### <Lithium Secondary Battery>

The present disclosure provides a lithium secondary battery.

According to one aspect of the present disclosure, there is provided a lithium secondary battery including: a positive electrode; a negative electrode; a separator provided between the positive electrode and the negative electrode; and an electrolyte liquid. Herein, the separator includes the porous polymer substrate described above.

In one embodiment of the present disclosure, the positive electrode may be prepared by coating a composition for forming a positive electrode including a positive electrode active material, a binder, a conductor, a solvent and the like on a positive electrode current collector.

As the positive electrode active material, common positive electrode active materials that may be used in a positive electrode of an existing electrochemical device may be used. Nonlimiting examples of such a positive electrode active material may include lithium manganese oxide, lithium cobalt oxide, lithium nickel oxide, lithium iron oxide, or lithium composite oxide obtained by combining these, however, the positive electrode active material is not limited thereto.

Meanwhile, the positive electrode active material may be included in an amount of 80 parts by weight to 99 parts by weight, for example, 85 parts by weight to 98 parts by weight relative to the total solid content weight of the composition for forming a positive electrode. When the positive electrode active material is included in the above-mentioned content range, the positive electrode including the same may exhibit excellent capacity properties.

The positive electrode current collector is not particularly limited as long as it has conductivity without inducing chemical changes to the corresponding battery, and for example, stainless steel, aluminum, nickel, titanium, baked carbon, or aluminum or stainless steel of which surface is treated with carbon, nickel, titanium, silver or the like, and the like may be used.

The binder is a component assisting binding of the active material, the conductor and the like and binding for the current collector, and is generally added in an amount of 1% by weight to 30% by weight based on the total solid content weight of the composition for forming a positive electrode. Examples of such a binder may include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, an ethylene-propylene-diene terpolymer (EPDM), a sulfonated EPDM, styrene-butadiene rubber, fluoro rubber, various copolymers and the like.

The conductor may be generally added in an amount of 1% by weight to 30% by weight based on the total solid content weight of the composition for forming a positive electrode.

Such a conductor is not particularly limited as long as it has conductivity without inducing chemical changes to the corresponding battery, and common conductors may be used. Examples of such a conductor may include graphite; carbon-based materials such as carbon black, acetylene black, ketjen black, channel black, furnace black, lamp black or thermal black; conductive fibers such as carbon fibers or metal fibers; fluorocarbon, metal powders such as aluminum or nickel powder; conductive whiskers such as zinc oxide or potassium titanate; conductive metal oxides such as titanium oxide; conductive materials such as polyphenylene derivatives, and the like. Specific examples of commercially available conductors may include acetylene black series (products of Chevron Chemical Company, denka black of Denka Singapore Private Limited, products of Gulf Oil Company and the like), Ketjen black, EC series (products of Armak Company), Vulcan XC-72 (products of Cabot Company), Super P (products of Timcal Ltd.) and the like.

Moreover, the positive electrode active material layer may optionally further include a dispersant as needed.

The dispersant is not particularly limited as long as it is used as a dispersant of a positive electrode, and for example, an aqueous dispersant or an organic dispersant may be selectively used as needed. Preferably, the dispersant may include a cellulose-based compound, polyalkylene oxide, polyvinyl alcohol, polyvinyl pyrrolidone, polyvinyl acetal, polyvinyl ether, polyvinyl sulfonic acid, polyvinyl chloride (PVC), polyvinylidene fluoride, chitosans, starch, amylose, polyacrylamide, poly-N-isopropylacrylamide, poly-N,N-dimethylacrylamide, polyethyleneimine, polyoxyethylene, poly(2-methoxyethoxyethylene), poly(acrylamide-co-diallyldimethylammonium chloride), an acrylonitrile/butadiene/styrene (ABS) polymer, an acrylonitrile/styrene/acryl ester (ASA) polymer, a mixture of acrylonitrile/styrene/acryl ester (ASA) polymer and propylene carbonate, a styrene/acrylonitrile (SAN) copolymer, a methyl methacrylate/acrylonitrile/butadiene/styrene (MABS) polymer, styrene butadiene rubber, nitrile butadiene rubber, fluoro rubber or the like, and among these, any one or a mixture of two or more thereof may be used. Hydrogenated nitrile butadiene rubber (H-NBR) may be used. When the positive electrode active material layer further includes a dispersant, dispersibility of the components of the positive electrode active material layer, particularly the conductor, may be increased, however, the effects are not limited thereto.

In addition, the solvent may be a solvent generally used in the art. Examples of the solvent may include dimethyl sulfoxide (DMSO), isopropyl alcohol, N-methyl pyrrolidone (NMP), acetone, water or the like, and these may be used either alone or as a mixture of two or more. It is sufficient that the solvent is used in an amount that dissolves or disperses the positive electrode active material, the conductor and the binder considering the slurry coating thickness and manufacturing yield, and provides a viscosity that ensures excellent thickness uniformity during coating for manufacturing the positive electrode thereafter.

The negative electrode according to the present disclosure may be prepared by coating a composition for forming a negative electrode including a negative electrode active material, a binder, a conductor, a solvent and the like on a negative electrode current collector. In addition, the composition for forming a negative electrode may optionally further include a dispersant as needed.

As the negative electrode active material, a compound capable of reversibly intercalating and deintercalating lithium may be used. Nonlimiting examples of such a negative electrode active material may include silicon-based negative electrode active materials exhibiting high-capacity properties, carbon-based negative electrode active materials, metal composite oxides such as LiₓFe₂O₃ (0≤x≤1), LiₓWO₂ (0≤x≤1) and SnₓMe₁₋ₓMe'_{y}O_{z} (Me: Mn, Fe, Pb, Ge; Me': Al, B, P, Si, elements of groups 1, 2 and 3 of the periodic table, halogen; 0<x≤1; 1≤y≤3; 1≤z≤8); lithium metal; lithium alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; titanium oxide; and lithium titanium oxide. The silicon-based negative electrode active material may include at least one selected from the group consisting of Si, SiOₓ (0.1<x<5), Si-metal alloys, silicon oxide particles (SiOₓ, 0.1<x<5) doped with or chemically bonded to a metal such as Mg, and alloys of Si and SiOₓ (0.1<x<5). The carbon-based negative electrode active material may include at least one selected from the group consisting of natural graphite, artificial graphite, amorphous hard carbon, low-crystalline soft carbon, carbon black, acetylene black, ketjen black, super P, graphene, and fibrous carbon.

The negative electrode current collector is not particularly limited as long as it has high conductivity without inducing chemical changes to the battery, and for example, copper, stainless steel, aluminum, nickel, titanium, baked carbon, copper or stainless steel of which surface is treated with carbon, nickel, titanium, silver or the like, an aluminum-cadmium alloy, or the like may be used. In addition, the negative electrode current collector may generally have a thickness of 3 µm to 500 µm, and, like the positive electrode current collector, may have micro unevenness formed on the current collector surface to strengthen binding strength with the negative electrode active material. For example, the negative electrode current collector may be used in various forms such as films, sheets, foil, nets, porous bodies, foams and non-woven fabrics.

The conductor, the binder, the solvent or the dispersant included in the composition for forming a negative electrode is not particularly limited as long as it may be generally used in a composition for forming an electrode, and for example, the conductor, the binder, the solvent or the dispersant described in the above-described composition for forming a positive electrode may be used.

In addition, the lithium secondary battery may further include an electrolyte liquid. The electrolyte liquid may include an organic-based liquid electrolyte, an inorganic-based liquid electrolyte, a solid polymer electrolyte, a gel-type polymer electrolyte, a solid inorganic electrolyte, a molten inorganic electrolyte or the like usable when manufacturing a lithium secondary battery, but is not limited thereto.

Specifically, the electrolyte liquid may include an organic solvent and a lithium salt.

The organic solvent may be used without particular limit as long as it is capable of serving as a medium through which ions involving in an electrochemical reaction of a battery migrate. Specifically, as the organic solvent, ester-based solvents such as methyl acetate, ethyl acetate, γ-butyrolactone or ε-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethyl carbonate (DMC), diethyl carbonate (DEC), methyl ethyl carbonate (MEC), ethyl methyl carbonate (EMC), ethylene carbonate (EC) or propylene carbonate (PC); alcohol-based solvents such as ethyl alcohol or isopropyl alcohol; nitriles such as R-CN (R is a linear, branched or cyclic-structured hydrocarbon group having 2 to 20 carbon atoms, and may include a double bond aromatic ring or ether bond); amides such as dimethylformamide; dioxolanes such as 1,3-dioxolane; sulfolanes, or the like may be used. Among these, carbonate-based solvents are preferred, and a mixture of a cyclic carbonate (for example, ethylene carbonate, propylene carbonate or the like) having high ion conductivity and high dielectric constant capable of improving charging and discharging performance of a battery and a low-viscosity linear carbonate-based compound (for example, ethylmethyl carbonate, dimethyl carbonate, diethyl carbonate or the like) is more preferred. In this case, performance of the electrolyte liquid may be excellent when the cyclic carbonate and the linear carbonate are mixed at a volume ratio of about 1:1 to about 1:9.

The lithium salt is not particularly limited as long as it is a compound capable of providing lithium ions used in a lithium secondary battery. Specifically, as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably in a range of 0.1 M to 2.0 M. When the lithium salt concentration is included in the above-mentioned range, the electrolyte liquid has proper conductivity and viscosity, and as a result, excellent electrolyte liquid performance may be obtained, and lithium ions may effectively migrate.

With the purpose of improving lifespan properties of a battery, suppressing a decrease in battery capacity, improving discharge capacity of a battery and the like, the electrolyte liquid may further include, in addition to the above-described components constituting the electrolyte liquid, one or more additives such as a haloalkylenecarbonate-based compound such as difluoroethylene carbonate, pyridine, triethylphosphite, triethanolamine, cyclic ether, ethylenediamine, n-glyme, hexaphosphoric acid triamide, a nitrobenzene derivative, sulfur, a quinoneimine dye, N-substituted oxazolidinone, N,N-substituted imidazolidine, ethylene glycol dialkyl ether, an ammonium salt, pyrrole, 2-methoxyethanol or aluminum trichloride. Herein, the additive may be included in an amount of 0.1 parts by weight to 5 parts by weight relative to 100 parts by weight of the total electrolyte liquid weight.

The lithium secondary battery according to the present disclosure may be included in a battery module as a unit cell, and the battery module may be used in a battery pack, and a device including the battery pack as a power source. Specific examples of the device may include an electric vehicle, a hybrid electric vehicle, a plug-in hybrid electric vehicle, or an energy storage system, however, the device is not limited thereto.

Hereinafter, the present disclosure will be described in more detail with reference to examples, however, the following examples are provided for illustrative purposes only, and the scope of the present disclosure is not limited thereto.

### <Example>

### <Example 1: Manufacture of Porous Polymer Substrate Using Wet Process>

As a first polymer, high-density polypropylene (weight average molecular weight: 1,000,000) having an ethylene monomer-derived first repeating unit was prepared, and as a second polymer, a polypropylene-polyethylene oxide copolymer (weight average molecular weight: 30,000) having a propylene monomer-derived second repeating unit and an ethylene oxide monomer-derived third repeating unit was introduced in an amount of 10 parts by weight relative to 100 parts by weight of the first polymer. Herein, the second repeating unit and the third repeating unit had a molar ratio of 5:5 in the second polymer. In addition, as a plasticizer, liquid paraffin oil was introduced to a twin-screw extruder in an amount of 230 parts by weight relative to 100 parts by weight of the first polymer. The extrudate discharged from the extruder set at a temperature of 150°C to 250°C was passed through a casting roll and cooled to obtain a sheet, and the obtained sheet was biaxially stretched using a tenter-type sequential stretching apparatus by MD stretching followed by TD stretching. The MD stretching ratio and the TD stretching ratio were both 3 to 12 times. From the stretched sheet obtained as above, the plasticizer was extracted using dichloromethane as an organic solvent, and as a result, a porous polymer substrate was manufactured. In the manufactured porous polymer substrate, the content of the second polymer was 10% by weight based on 100% by weight of the porous polymer substrate.

### <Comparative Example 1>

A sheet was obtained by passing an extrudate discharged from an extruder through a casting roll in the same manner as in Example 1, except that the second polymer was not used. After that, a porous polymer substrate was manufactured in the same manner as in Example 1.

### <Experimental Example 1>

### Experimental Example 1: Measurement of Impregnation Properties of Example 1 and Comparative Example 1

As an electrolyte liquid, LiPF₆ was added to a non-aqueous electrolyte liquid solvent prepared by mixing ethylene carbonate and diethyl carbonate in a volume ratio of 30:70 to prepare a 1 M LiPF₆ non-aqueous electrolyte liquid.

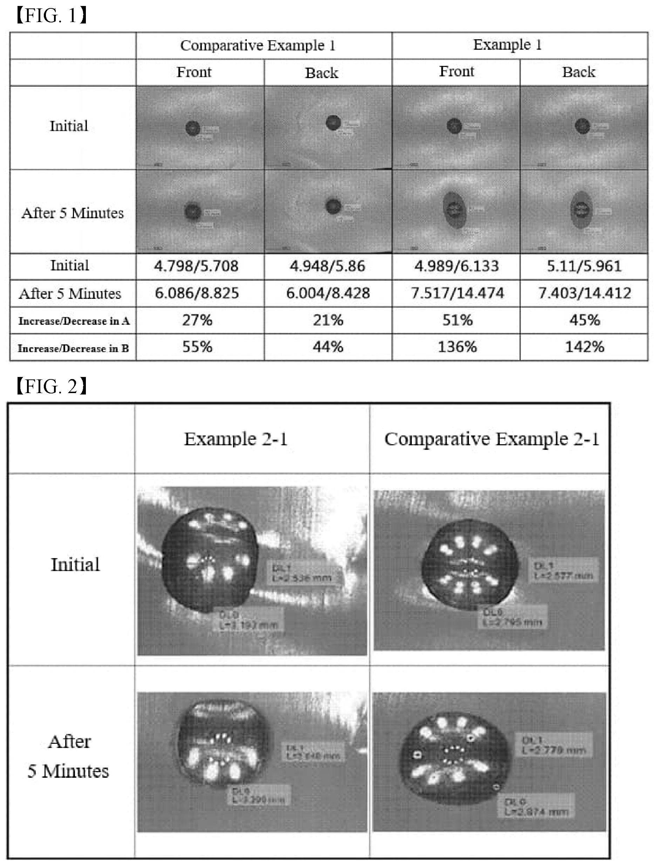

The prepared electrolyte liquid was dropped on one surface of the porous polymer substrate of each of Example 1 and Comparative Example 1 using a dropper, and the degree of electrolyte liquid impregnation after 5 minutes is shown in FIG. 1.

Specifically, the horizontal direction was defined as A and the vertical direction was defined as B, and the sizes in the A and B directions of the electrolyte liquid impregnation were measured after 5 minutes relative to the initial sizes in Example 1 and Comparative Example 1, and the rate of increase was calculated. (A direction and B direction are orthogonal to each other)

As shown in FIG. 1, the rate of increase in the A-direction size was 24% points higher and the rate of increase in the B-direction size was 81% points higher in Example 1 compared to in Comparative Example 1 when viewed from the front (surface onto which the electrolyte liquid was dropped). In addition, when viewed from the back, the rate of increase in the A-direction size was 24% points higher and the rate of increase in the B-direction size was 98% points higher. In other words, it could be confirmed that Example 1 exhibited improved impregnation properties compared to Comparative Example 1.

### <Example 2: Manufacture of Porous Polymer Substrate Using Dry Process>

### Example 2-1

As a first polymer, polypropylene (Korea Petrochemical Ind. Co., Ltd., S802M, weight average molecular weight: 230,000) having a propylene-derived first repeating unit was prepared, and as a second polymer, a polypropylene-*b*-polyethylene oxide copolymer (PP-*b*-PEO, Sanyo Chemical Industries, Ltd., Pelestat230, weight average molecular weight: 40,000) having a propylene-derived second repeating unit and an ethylene oxide monomer-derived third repeating unit was prepared. Herein, the second repeating unit (hard segment) and the third repeating unit (soft segment) had a weight ratio of 1:1. The first polymer and the second polymer were compounded in a ratio of 5:5 to increase kneadability, and the first polymer was additionally introduced to the compounded pellets so that the first polymer and the second polymer had a final weight ratio of 95:5 when introduced to an extruder. The mixture was extruded into a sheet form at a temperature of 230°C using a T-die extruder. The extruded unstretched sheet was brought into contact with a chill roll maintained at 126°C to be crystallized. The crystallinity of the unstretched sheet was determined to be about 58.6%.

After that, stretching in the MD direction was performed using a method based on a peripheral speed difference between multiple stretching rollers. For this purpose, a series of rollers maintained at 120°C were prepared, and the sheet was stretched in the MD direction by continuously increasing the roller speed until the speed reached 300% of the initial speed.

### Example 2-2

The separator manufactured in Example 2-1 was held at both ends with clips and then introduced to an oven maintained at 161°C. The separator was stretched in the TD direction until its width reached 185% of the initial input width, while simultaneously reducing the width in the MD direction to about 55% to manufacture a separator.

### Comparative Example 2-1

A separator was manufactured in the same manner as in Example 2-1, except that the second polymer was not used.

### Comparative Example 2-2

A separator was manufactured in the same manner as in Example 2-1, except that the raw material input ratio was adjusted so that the first polymer and the second polymer had a weight ratio of 80:20. The crystallinity of the unstretched sheet was reduced to about 41.3%, and the separator had porosity of 30% or less and puncture strength of 200 gf or less, failing to achieve target properties.

For the separator substrate of each of Examples 2-1, 2-2 and Comparative Example 2-1 obtained as above, the thickness, porosity, pore size, puncture strength, the weight ratio of the first polymer to the second polymer in the central portion and the surface portion of the separator, and the impregnation property test results are shown in Table 1.

**[Table 1]**

| | Thic kness (µm) | Porosity (vol %) | Pore Size (nm) | Puncture Strength (gf) | Weight Ratio of First Polymer: Second Polymer in Central Portion of Separator | Weight Ratio of First Polymer: Second Polymer in Surface Portion of Separator | Impreg nation Property Test Results |
|---|---|---|---|---|---|---|---|
| Example 2-1 | 10.9 | 34.6 | 32 | 252.8 | 97.6:2.4 | 92.2:7.8 | 20.18% Increase |
| Example 2-2 | 10.8 | 37.7 | 38 | 271.1 | 97.8:2.2 | 91.9:8.1 | 25.22% Increase |
| Comparative Example 2-1 | 11.9 | 39.3 | 32 | 301.3 | 100:0 | 100:0 | 10.89% Increase |

Examples 2-1 and 2-2 exhibited superior electrolyte liquid impregnation properties compared to Comparative Example 2-1. Specifically, according to FIG. 2, the area occupied by the electrolyte liquid increased to 20.18% after 5 minutes relative to the initial area in Example 2-1,whereas the area occupied by the electrolyte liquid increased to 10.89% after 5 minutes relative to the initial area in Comparative Example 2-1, confirming that Example 2-1 exhibited increased electrolyte liquid impregnation, that is, more excellent hydrophilicity compared to Comparative Example 2-1. Meanwhile, it could be confirmed that, compared to Comparative Example 2-1, Examples 2-1 and 2-2 had adequate mechanical properties such as porosity and puncture strength even when including the second polymer.

In addition, the separators of Example 2-1 and 2-2 had the second polymer distributed more in the surface portion than in the central portion of the separator, confirming that a predetermined amount of the second polymer is used, and the degree of hydrophilic modification of the separator is maximized.

### <Experimental Example 2>

### Experimental Example 2-1: Measurement of Thickness for Separators of Examples 2-1, 2-2 and Comparative Example 2-1

The thicknesses of the separators in Examples 2-1, 2-2 and Comparative Example 2-1 were measured using a thickness gauge (Mitutoyo Corporation, VL-50S-B).

### Experimental Example 2-2: Measurement of Porosity for Separators of Examples 2-1, 2-2 and Comparative Example 2-1

The porosity of the separator in each of Examples 2-1, 2-2 and Comparative Example 2-1 was determined by taking a specimen of a specific area, then measuring its weight, and using an equation of porosity (%)=100-[(weight of separator)/(area of specimenxthickness of specimenxdensity of separator material)]x100.

### Experimental Example 2-3: Pore Size of Separators of Examples 2-1, 2-2 and Comparative Example 2-1

The pore size of the separator in each of Examples 2-1, 2-2 and Comparative Example 2-1 was determined according to a capillary flow porometry (CFP) method of taking a specimen of a specific area, and then measuring a diameter of the smallest pore in the thickness direction.

### Experimental Example 2-4: Puncture Strength of Separators of Examples 2-1, 2-2 and Comparative Example 2-1

The puncture strength of the separator of each of Examples 2-1, 2-2 and Comparative Example 2-1 was calculated by measuring strength when pressing a pin having a diameter of 1 mm (radius of curvature of 0.5 mm) into the separator at a speed of 2 mm/sec, and dividing the strength by the thickness of the separator. The puncture strength was measured using an Instron 3342 equipment (manufacturer: Instron).

### Experimental Example 2-5: Weight Ratio of First Polymer to Second Polymer in Central and Surface Portions of Separators of Examples 2-1, 2-2 and Comparative Example 2-1

IR analysis was performed on the first polymer and the second polymer individually and at various mixing ratios to prepare a calibration curve for the contents of the first polymer and the second polymer. The separator of each of Examples 2-1, 2-2 and Comparative Example 2-1 was obliquely cut at an angle of 5° to obtain a sample. For the obtained sample, characteristic peaks in the central and surface portions of the separator were identified using Micro-ATR (attenuated total reflectance) equipment. The content ratios were calculated by comparing and interpolating the measured characteristic peaks with the previously prepared calibration curve.

### Experimental Example 2-6: Measurement of Impregnation Properties for Separators of Example 2-1 and Comparative Example 2-1

As an electrolyte liquid, LiPF₆ was added to a non-aqueous electrolyte liquid solvent prepared by mixing ethylene carbonate and diethyl carbonate in a volume ratio of 30:70 to prepare a 1 M LiPF₆ non-aqueous electrolyte liquid.

The prepared electrolyte liquid was dropped on one surface of the porous polymer substrate of each of Example 2-1 and Comparative Example 2-1 using a dropper, and the degree of electrolyte liquid impregnation after 5 minutes is shown in FIG. 2.

Specifically, after dropping the prepared electrolyte liquid on one surface of the porous polymer substrate of each of Example 2-1 and Comparative Example 2-1 using a dropper, the initial area was measured, and the area occupied by the electrolyte liquid after 5 minutes was measured to calculate the rate of increase. The data on the increase in the impregnation for Example 2-1 and Comparative Example 2-1 are shown in FIG. 2.

### Experimental Example 2-7: Measurement of SEM Images for Separators of Example 2-1 and Comparative Example 2-1

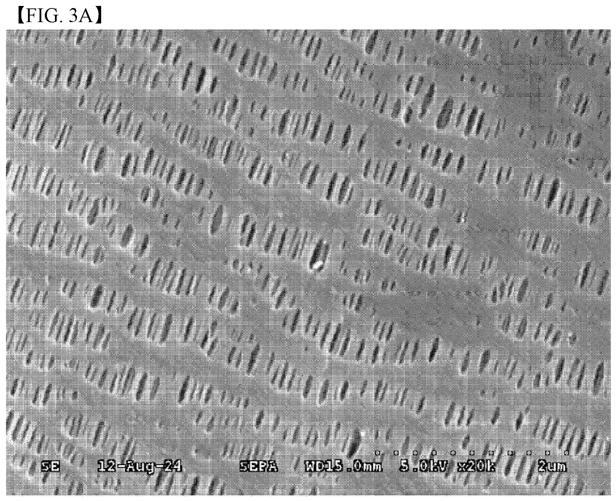

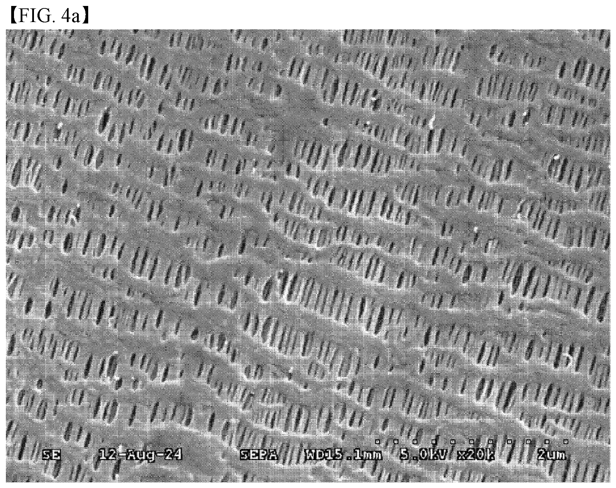

The surfaces of the porous polymer substrates of Example 2-1 and Comparative Example 2-1 were measured using an SEM, and shown in FIGS. 3A and 3B, respectively.

## Claims

1. A porous polymer substrate comprising:
a first polymer includes an olefin-derived first repeating unit; and
a second polymer includes a hard segment including an olefin-derived second repeating unit and a soft segment including a third repeating unit derived from a hydrophilic group-containing or oxygen-containing monomer,
wherein a weight average molecular weight of the first polymer is at least 3 times a weight average molecular weight of the second polymer.

2. The porous polymer substrate of claim 1, wherein a content of the second polymer has a gradient such that the content increases from a center of the porous polymer substrate toward a surface thereof.

3. The porous polymer substrate of claim 1, wherein the content of the second polymer at the surface of the porous polymer substrate is at least 1.5 times the content of the second polymer at the center of the porous polymer substrate.

4. The porous polymer substrate of claim 1, wherein the first polymer has a weight average molecular weight of 150,000 to 2,000,000, and the second polymer has a weight average molecular weight of 10,000 to 100,000.

5. The porous polymer substrate of claim 1, wherein the content of the second polymer is 1% by weight to 15% by weight based on 100% by weight of the porous polymer substrate.

6. The porous polymer substrate of claim 1, wherein the hard segment and the soft segment have a weight ratio of 1:0.1 to 5 in the second polymer.

7. The porous polymer substrate of claim 1, wherein the first repeating unit is derived from ethylene, propylene, butylene, pentene, isoprene, or two or more monomers thereof.

8. The porous polymer substrate of claim 1, wherein the second repeating unit is derived from ethylene, propylene, butylene, pentene, isoprene, or two or more monomers thereof.

9. The porous polymer substrate of claim 1, wherein the third repeating unit is derived from an epoxy group-containing monomer, a hydroxyl group-containing monomer, a carboxyl group-containing monomer, or two or more monomers thereof.

10. A method for manufacturing a porous polymer substrate, the method comprising:
kneading and extruding a mixture including a first polymer, a second polymer and a plasticizer to obtain an extrudate;
cooling the extrudate on a casting roll to obtain a sheet;
biaxially stretching the obtained sheet in a machine direction (MD) and a transverse direction (TD) to obtain a stretched sheet; and
extracting the plasticizer from the stretched sheet using an organic solvent,
wherein the first polymer includes an olefin-derived first repeating unit,
the second polymer includes a hard segment including an olefin-derived second repeating unit and a soft segment including a third repeating unit derived from a hydrophilic group-containing or oxygen-containing monomer, and
a weight average molecular weight of the first polymer is at least 3 times a weight average molecular weight of the second polymer.

11. The method of claim 10, wherein the mixture includes the second polymer in an amount of 1 part by weight to 15 parts by weight and the plasticizer in an amount of 200 parts by weight to 300 parts by weight based on 100 parts by weight of the first polymer.

12. The method of claim 10, wherein the kneading of a mixture is performed using a twin-screw extruder having a length (L)/diameter (D) of 52 or greater and 80 or less.

13. The method of claim 10, wherein the obtaining of an extrudate is performed using a die extruder.

14. A method for manufacturing a porous polymer substrate, the method comprising:
preparing a mixture including a first polymer and a second polymer;
melt-extruding the mixture to prepare an unstretched sheet; and
stretching the unstretched sheet to obtain a stretched sheet,
wherein the first polymer includes an olefin-derived first repeating unit,
the second polymer includes a hard segment including an olefin-derived second repeating unit and a soft segment including a third repeating unit derived from a hydrophilic group-containing or oxygen-containing monomer, and
a weight average molecular weight of the first polymer is at least 3 times a weight average molecular weight of the second polymer.

15. The method of claim 14, wherein the unstretched sheet has crystallinity of 50% to 70%.

16. The method of claim 14, wherein the obtaining of a stretched sheet includes performing stretching in an MD direction and a TD direction.

17. A lithium secondary battery comprising:
a positive electrode;
a negative electrode;
a separator interposed between the positive electrode and the negative electrode; and
an electrolyte liquid,
wherein the separator includes the porous polymer substrate of any one of claims 1 to 9.
